# EUROPEAN PATENT APPLICATION

(11) **EP 4 506 976 A1**
(43) Date of publication of application: **12.02.2025**
(21) Application number: 23306363.5
(22) Date of filing: 11.08.2023
(51) Int. Cl.: H01H 33/59, H02H 3/087

(54) **CURRENT BREAKING DEVICE FOR INTERRUPTING A HIGH VOLTAGE DIRECT CURRENT PATH**

(71) Applicant: SCHNEIDER ELECTRIC INDUSTRIES SAS, 92500 Rueil-Malmaison (FR)
(72) Inventor: NOVAK, Pavel, 93049 Regensburg (DE); PREVE, Christophe, 38330 Biviers (FR); GRIESHABER, Wolfgang, 69006 Lyon (FR); MAKHLOUF, Samir, 01290 Grièges (FR)
(74) Representative: Plasseraud IP

(57) **Abstract**

The invention relates to a current breaking device (20) for interrupting a current flow in a high voltage direct current path, comprising :
- a main branch (A) inserted in the direct current path, comprising a first normally closed mechanical circuit breaker (CB1),
- a first auxiliary branch (B) connected in parallel to the first mechanical circuit breaker (CB1), and comprising a series connection of a capacitor bank (CA), an inductor (IN) and a second normally open mechanical circuit breaker (CB2),
- a surge arrester (SA) connected in parallel to the capacitor bank (CA),
- a second auxiliary branch (C) connecting a first intermediate terminal (11) comprised between the capacitor bank (CA) and the inductor (IN) to an earthed connection (EC), and comprising a resistor (R),
in which the second mechanical circuit breaker (CB2) is configured for closing the first auxiliary branch (B) in response to the appearance of a fault current in the main branch (A), so as to produce a current zero crossing in the main branch (A).

## Description

### Technical Field

This disclosure relates to medium voltage direct current distribution systems, and more particularly to a circuit and a method for interrupting a current flow in a direct current (DC) path.

### Background Art

High voltage direct current transmission can be an interesting solution for reducing overall losses of the network, and for integrating renewable electrical sources such as wind or photovoltaic powered sources. As conventional alternative current networks, direct current networks need to be protected against short circuits by circuit breakers.

In alternative current networks, the zero crossing events of the current are used for extinguishing the electric arc generated when electrical circuit is open, and for actually interrupting the current flow. A typical difficulty for operating direct current circuit breakers is that no zero crossing of the current naturally occurs.

In order to create zero crossing events of the DC current, a method usually referred to as current injection has been developed. According to this method, an oscillating circuit comprising a capacitance and an inductance is connected in parallel to a main path of the circuit breaker, and the current oscillations in the parallel circuit are superimposed upon the direct current flow in the main path of the circuit breaker. The resulting current combination oscillates around and across zero, allowing a current interruption.

Different solutions have been proposed for current injection. These solutions usually associate various switches for charging and discharging the oscillating circuit. These switches may be difficult to synchronize and to control, leading a complex device.

The proposed solution improves the design of the known solutions. It proposes a circuit topology, utilizing some alternative current switchgear configuration for interrupting the current in a direct current network.

### Summary

To this end, it is proposed a current breaking device for interrupting a current flow in a high voltage direct current path between a first terminal and a second terminal, comprising :
- a main branch inserted in the direct current path, comprising a first mechanical circuit breaker, the first mechanical circuit breaker being normally closed,
- a first auxiliary branch connected in parallel to the first mechanical circuit breaker, and comprising a series connection of a capacitor bank, an inductor and a second mechanical circuit breaker, called commutation switch, the second mechanical circuit breaker being normally open,
- a surge arrester connected in parallel to the capacitor bank,
- a second auxiliary branch connecting a first intermediate terminal comprised between the capacitor bank and the inductor to an earthed connection, the second auxiliary branch comprising a resistor,
in which the second mechanical circuit breaker is configured for closing the first auxiliary branch in response to the appearance of a fault current in the main branch, so as to create a current which is superimposed upon a current flow in the main branch and produces a current zero crossing in the main branch.

This arrangement provides current interruption capability with a limited number of components, making a cost effective and compact design.

The following features can optionally be implemented, separately or in combination one with the others:

In an embodiment of the current breaking device:
- the first terminal is connected to a source of a network, and
- the second terminal is connected to a ring of electrical loads.

The main branch is a main electrical conduction line.

The first auxiliary branch is a secondary electrical conduction line.

The second auxiliary branch is a tertiary electrical conduction line.

The current breaking device can operate in a first mode, called normal operation mode, in which the first mechanical circuit breaker is in a closed state and the second mechanical circuit breaker is in an open state.

The current breaking device can further operate in a second mode, called fault mode, in which the first mechanical circuit breaker is in an open state and the second mechanical circuit breaker is in a closed state.

The current breaking device can switch from the first mode to the second mode in response to the appearance of a fault current in the main branch.

The current breaking device can further operate in a third mode, called residual current interrupted mode, in which the first mechanical circuit breaker is in an open state and the second mechanical circuit breaker is in an open state.

The current breaking device can switch from the second mode to the third mode is response to the appearance of residual fault current in the first auxiliary branch.

The current breaking device can operate in a fourth mode, called normal operation mode after fault interruption, in which the first mechanical circuit breaker is in a closed state and the second mechanical circuit breaker is in an open state.

The current breaking device can switch from the third mode to the fourth mode after recharging of capacitor bank by current flow from a source side to second auxiliary branch resistor.

The inductance of the inductor is comprised between 10 µH and 1 mH.

The capacitance of the capacitor bank is comprised between 3 µ F and 300 µ F.

The resistance of the resistor is higher than 1000 Ohm.

A ratio of the pole-to-ground voltage and the resistance is lower than 2 A.

A product of the inductance and the capacitance is comprised between 3.10⁻⁷ s² and 3.10⁻¹¹ s².

In an embodiment of the current breaking device, the first auxiliary branch comprises a first connection with the main branch and a second connection with the main branch, the first connection being comprised between the first terminal and a first terminal of the first mechanical circuit breaker, the second connection being comprised between the second terminal and a second terminal of the first mechanical circuit breaker.

The current breaking device further comprises:
- a third mechanical circuit breaker disposed on the first auxiliary branch between the first connection of the first auxiliary branch with the main branch and a connection of the surge arrester with the capacitor bank,
- a fourth mechanical circuit breaker disposed on the second auxiliary branch between the first intermediate terminal and the resistor,
- a third auxiliary branch connecting a second intermediate terminal comprised between the third mechanical circuit breaker and the capacitor bank to a third intermediate terminal comprised between the fourth circuit breaker and the resistor, the third auxiliary branch comprising a fifth circuit breaker.

The current breaking device is configured for operating selectively:
- in a first configuration in which the first terminal is connected to a source and the second terminal is connected to a ring of electrical loads, or
- in a second configuration in which the first terminal is connected to a ring of electrical loads, and the second terminal is connected to a source.

Each of the first mechanical circuit breaker, second mechanical circuit breaker, third mechanical circuit breaker may comprise a vacuum interrupter.

The fourth mechanical circuit breaker and the fifth mechanical circuit breaker may also comprise a vacuum interrupter.

By integrating vacuum interrupters, breaking of residual current can also be handled. Compared to prior art solutions, a dedicated residual switch is not necessary and can be spared, making the device simpler.

The current breaking device may further comprise a first switching device disposed on the first auxiliary branch between the inductor and the second connection of the first auxiliary branch with the main branch.

In an example of implementation, the first switching device is disposed on the first auxiliary branch between the second mechanical circuit breaker and the second connection of the first auxiliary branch with the main branch.

The current breaking device may further comprise a second switching device disposed on the main branch between a first connection of the first auxiliary branch with the main branch and a second connection of the first auxiliary branch with the main branch.

The current breaking device may further comprise a third switching device disposed on the main branch between the first terminal and the first connection of the first auxiliary branch with the main branch.

The switching devices provide capability to safely discharge the capacitors of the commutation circuit and provide safety earthing of the source or load side circuit, particularly when the switching devices are earth switches.

The current breaking device may further comprise a fourth switching device disposed on the first auxiliary branch between the first connection of the first auxiliary branch with the main branch and the second intermediate terminal.

The current breaking device may further comprise a fifth switching device disposed on the second auxiliary branch between the first intermediate terminal and the resistor.

In an example of implementation, the fifth switching device is disposed between the first intermediate terminal and the fourth mechanical circuit breaker.

The current breaking device may further comprise a sixth switching device disposed on the third auxiliary branch.

In an example of implementation, the sixth switching device is disposed between the second intermediate terminal and the fifth mechanical circuit breaker.

Each switching device can be a two-position disconnector, or a three-position switch.

In an embodiment of the current breaking device, the first mechanical circuit breaker, the second mechanical circuit breaker and the third switching device are disposed in a first gas insulated tank.

In an embodiment, the first mechanical circuit breaker, the second mechanical circuit breaker, the first switching device, the second switching device and the third switching device are disposed in a first gas insulated tank.

The third mechanical circuit breaker can be disposed in the first gas insulated tank.

The integration of the different mechanical circuit breakers and switching devices in a common gas insulated tank provides electrical insulation characteristics and environmental sensitivity, making this solution robust and reliable. Furthermore, the correct synchronization of the operation of the first mechanical circuit breaker, the second mechanical circuit breaker and the third mechanical circuit breaker is made easier when they're arranged in the same gas insulated tank, as part of one switchgear. Installation and future servicing are simplified. Furthermore, this integration of mechanical circuit breakers and switching devices in a common tank provides a more compact and cheaper solution, compared to alternatives installations as separate equipments.

In an embodiment of the current breaking device, the capacitor bank, the inductor, the resistor and the surge arrester are disposed in a metal enclosed compartment.

The assembly of the current breaking device is easier when the capacitor bank, the inductor, the resistor and the surge arrester form a pre-assembled module.

In an embodiment of the current breaking device, the fourth mechanical circuit breaker and the fifth mechanical circuit breaker are disposed in a second gas insulated tank. The resistor is also disposed in the second gas insulated tank.

The fifth switching device and the sixth switching device can also be disposed in the second gas insulated tank.

In an embodiment of the current breaking device, the capacitor bank, the inductor, and the surge arrester are disposed in a metal enclosed compartment.

As before, the synchronization of the circuit breakers is simplified, as well as installation and future servicing.

### Brief Description of Drawings

Other features, details and advantages will be shown in the following detailed description and on the figures, on which:
- Figure 1 is a schematic view of a first embodiment of a proposed circuit breaker,
- Figure 2 is a schematic view of a second embodiment of a proposed circuit breaker,
- Figure 3 is a variant of the embodiment of figure 1,
- Figure 4 is a variant of the embodiment of figure 2,
- Figure 5 is a schematic view illustrating the operation of the circuit breaker according the first embodiment,
- Figure 6 is a schematic view illustrating the operation of the circuit breaker according the second embodiment,
- Figure 7 represents the temporal evolution of some parameters during operation of the circuit breaker,
- Figure 8 represents the temporal evolution of other parameters during operation of the circuit breaker.

### Description of Embodiments

In order to make the figures easier to read, the various elements are not necessarily represented to scale. In these figures, identical elements receive the same reference number. Certain elements or parameters can be indexed, that is to say designated for example by 'first element' or second element, or first parameter and second parameter, etc. The purpose of this indexing is to differentiate elements or parameters that are similar, but not identical. This indexing does not imply a priority of one element, or one parameter over another, and their names can be interchanged. When it is mentioned that a subsystem comprises a given element, the presence of other elements in this subsystem is not excluded.

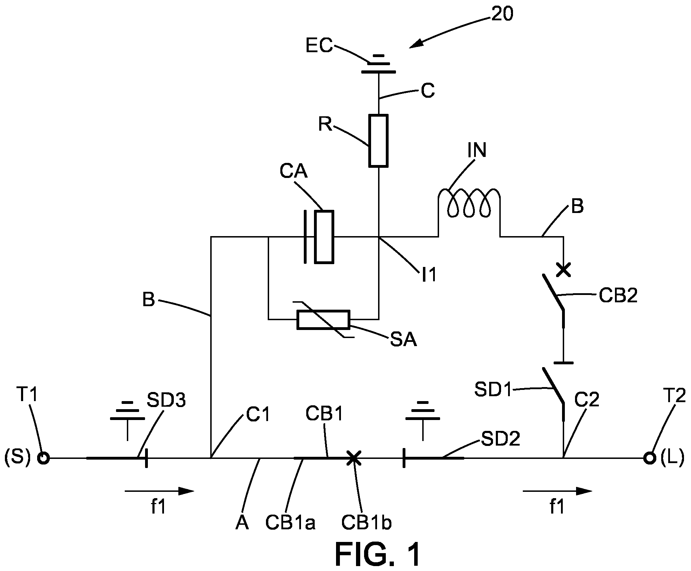

Figure 1 illustrates schematically a first embodiment of a current breaking device 20 for interrupting a current flow in a high voltage direct current (DC) path between a first terminal T1 and a second terminal T2.

The proposed current breaking device 20 for interrupting a current flow in a high voltage direct current path between a first terminal T1 and a second terminal T2 comprises :
- a main branch A inserted in the direct current path, comprising a first mechanical circuit breaker CB1, the first mechanical circuit breaker CB1 being normally closed,
- a first auxiliary branch B connected in parallel to the first mechanical circuit breaker CB1, and comprising a series connection of a capacitor bank CA, an inductor IN and a second mechanical circuit breaker CB2, called commutation switch, the second mechanical circuit breaker CB2 being normally open,
- a surge arrester SA connected in parallel to the capacitor bank CA,
- a second auxiliary branch C connecting a first intermediate terminal l1 comprised between

the capacitor bank CA and the inductor IN to an earthed connection EC, the second auxiliary branch C comprising a resistor R.

The second mechanical circuit breaker CB2 is configured for closing the first auxiliary branch B in response to the appearance of a fault current in the main branch A, so as to create a current which is superimposed upon a current flow in the main branch A and produces a current zero crossing in the main branch A.

According to this first embodiment of the current breaking device 20, the first terminal T1 is connected to a source S of a network, and
the second terminal T2 is connected to a ring of electrical loads L.

In other words, in this embodiment the circulation of the electrical current in the main branch A is mono-directional. The current circulates in the direction indicated by the arrow f1.

By definition and in the context of this disclosure, a source is an electrical node which supplies electrical power.

Conversely, an electrical load is an electrical node which consumes electrical power.

The main branch A is a main electrical conduction line.

The first auxiliary branch B is a secondary electrical conduction line.

The second auxiliary branch C is a tertiary electrical conduction line.

By definition, a normally open circuit breaker is a circuit breaker in which a clearance between contacts is by default secured, so that current circulation is interrupted.

A normally closed circuit breaker is a circuit breaker in which a continuity of the contacts is by default secured, so that current circulation is enabled.

The normally closed circuit breaker can be opened in response to the appearance of an electrical fault in the branch of circuit in which the circuit breaker is included.

The current breaking device 20 can operate in a first mode, called normal operation mode, in which the first mechanical circuit breaker CB1 is in a closed state and the second mechanical circuit breaker CB2 is in an open state.

In this mode, current flows through the main branch A, and no current flows in the first auxiliary branch B and the second auxiliary branch C.

The current breaking device 20 can operate in a second mode, called fault mode, in which the first mechanical circuit breaker CB1 is in an open state and the second mechanical circuit breaker CB2 is in a closed state.

The current breaking device 20 can switch from the first mode to the second mode in response to the appearance of a fault current in the main branch A.

The current breaking device 20 can further operate in a third mode, called residual current interrupted mode, in which the first mechanical circuit breaker CB1 is in an open state and the second mechanical circuit breaker CB2 is in an open state.

The current breaking device 20 can switch from the second mode to the third mode is response to the appearance of a residual fault current in the first auxiliary branch B.

The current breaking device 20 can operate in a fourth mode, called normal operation mode after fault interruption, in which the first mechanical circuit breaker CB1 is in a closed state and the second mechanical circuit breaker CB2 is in an open state.

The current breaking device 20 can switch from the third mode to the fourth mode after recharging of capacitor bank CA by a current flow from the source side S to the resistor R of the second auxiliary branch C.

The inductance of the inductor L is comprised between 10 µH and 1 mH.

The capacitance of the capacitor bank CA is comprised between 3 µF and 300 µF.

The resistance of the resistor R is higher than 1000 Ohm.

A ratio of the pole-to-ground voltage and the resistance is lower than 2 A.

A product of the inductance and the capacitance is comprised between 3.10⁻¹¹ s² and 3.10⁻⁷ s².

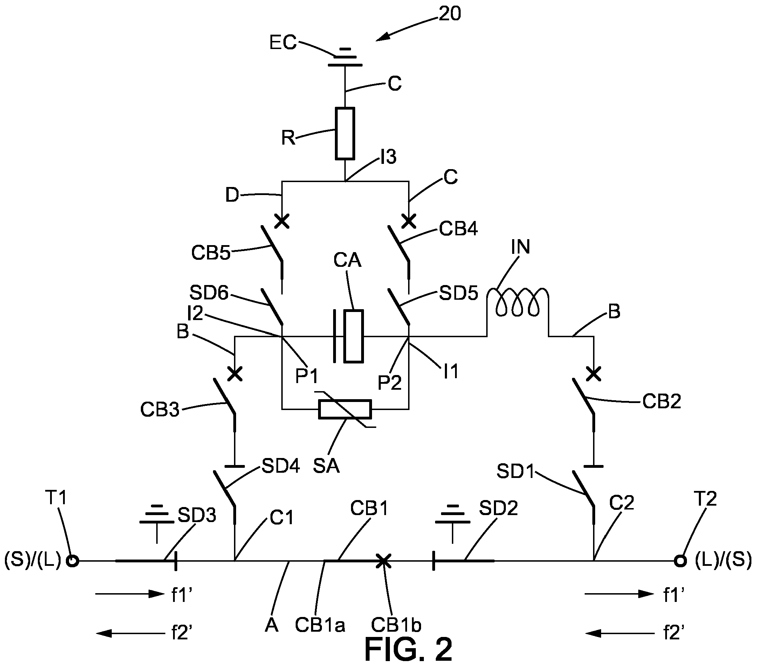

Figure 2 illustrates schematically a second embodiment of a current breaking device 20.

The first auxiliary branch B comprises a first connection C1 with the main branch A and a second connection C2 with the main branch A.

The first connection C1 is comprised between the first terminal T1 and a first terminal CB1a of the first mechanical circuit breaker CB1. The second connection C2 is comprised between the second terminal T2 and a second terminal CB1b of the first mechanical circuit breaker CB1.

The current breaking device 20 further comprises:
- a third mechanical circuit breaker CB3 disposed on the first auxiliary branch B between the first connection C1 of the first auxiliary branch B with the main branch A and a first connection P1 of the surge arrester SA with the capacitor bank CA,
- a fourth mechanical circuit breaker CB4 disposed on the second auxiliary branch C between the first intermediate terminal I1 and the resistor R,
- a third auxiliary branch D connecting a second intermediate terminal I2 comprised between the third mechanical circuit breaker CB3 and the capacitor bank CA to a third intermediate terminal I3 comprised between the fourth circuit breaker CB4 and the resistor R, the third auxiliary branch D comprising a fifth circuit breaker CB5.

A first terminal of the resistor R is directly connected to the earth Ec.

The second terminal of the resistor R is connected to a first terminal of the capacitor bank CA, called first intermediate terminal I1, by a portion of the second auxiliary branch C comprising the fourth mechanical circuit breaker CB4.

The second terminal of the resistor R is also connected to the second terminal of the capacitor bank CA, called second intermediate terminal I2, by a portion of the third auxiliary branch D comprising the fifth mechanical circuit breaker CB5.

The surge arrester SA and the capacitor bank CA are connected in parallel between the first intermediate terminal I1 and the second intermediate terminal I2.

A first terminal of the inductor IN is directly connected to the first intermediate terminal I1. The second terminal of the inductor IN is connected to the main branch A through the second mechanical circuit breaker CB2..

The first connection P1 of the surge arrester SA with the capacitor bank CA may be merged with the second intermediate terminal I2 in which the third auxiliary branch D is connected to the first auxiliary branch B. In other words, the first connection P1 may coincide with the second intermediate terminal I2.

The first intermediate terminal I1, in which the second auxiliary branch C is connected to the first auxiliary branch B, may be merged with a second connection P2 of the surge arrester SA with the capacitor bank CA. In other words, the first intermediate terminal I1 may coincide with the second connection P2.

The current breaking device 20 is configured for operating selectively:
- in a first configuration in which the first terminal T1 is connected to a source S and the second terminal T2 is connected to a ring of electrical loads L, or
- in a second configuration in which the first terminal T1 is connected to a ring of electrical loads L, and the second terminal T2 is connected to a source S.

In the second embodiment, the circulation of the current in the main branch A can be bidirectional. The location of the electrical source S and the electrical loads L may be exchanged depending on the required configuration of electrical network. In other words, the current breaking device 20 is adaptable to the configuration of the electrical network. In a configuration in which the first terminal is connected to a source S and the second terminal is connected to a ring of electrical loads L, the current circulates in the direction indicated by the arrow f1'.

In an alternative configuration in which the first terminal is connected to a ring of electrical loads L and the second terminal is connected to a source S, the current circulates in the direction indicated by the arrow f2'.

In the second embodiment, when a fault current flow is interrupted, the bank of capacitors CA can be recharged in both configurations of the network.

When the first terminal T1 is connected to a source, the capacitors are charged by closing both the third mechanical circuit breaker CB3 and the fourth mechanical circuit breaker CB4. When the second terminal T2 is connected to a source, the capacitors are charged by closing both the second mechanical circuit breaker CB2 and the fifth mechanical circuit breaker CB5.

Once the capacitors are charged, the first circuit breaker CB1 can be closed to resume the current circulation in the main branch A. In case the fault is still present, the current breaking device 20 will trigger a current interruption again.

Each of the first mechanical circuit breaker CB1, second mechanical circuit breaker CB2, third mechanical circuit breaker CB3 may comprise a vacuum interrupter.

The current breaking device 20 further comprises a first switching device SD1 disposed on the first auxiliary branch B between the inductor IN and the second connection C2 of the first auxiliary branch B with the main branch A.

In the illustrated example, the first switching device SD1 is disposed on the first auxiliary branch B between the second mechanical circuit breaker CB2 and the second connection C2 of the first auxiliary branch B with the main branch A.

The first switching device SD1 is present in both the first and second embodiment.

The current breaking device 20 further comprises a second switching device SD2 disposed on the main branch A between the first connection C1 of the first auxiliary branch B with the main branch A and the second connection C2 of the first auxiliary branch B with the main branch A.

The first auxiliary branch B is connected in parallel with a portion of the main branch A comprising the association in series connection of the first mechanical circuit breaker CB1 and second switching device SD2.

The current breaking device 20 further comprises a third first switching device SD3 disposed on the main branch A between the first terminal T1 and the first connection C1 of the first auxiliary branch B with the main branch A.

The second switching device SD2 and the third switching device SD3 are present in both the first and the second embodiment.

The switching devices SD1, SD2 provide capability to safely discharge the capacitors of the commutation circuit and provide safety earthing of the source or load side circuit, particularly when the switching devices are earth switches.

In the second embodiment, the current breaking device 20 further comprises a fourth switching device SD4 disposed on the first auxiliary branch B between the first connection C1 of the first auxiliary branch B with the main branch A and the second intermediate terminal I2.

The portion of the first auxiliary branch B comprised between the first connection C1 of the first auxiliary branch B with the main branch A and the connection I2 with the third auxiliary branch D comprises the fourth switching device SD4 and the third mechanical circuit breaker CB3 connected in series.

Similarly, the portion of the first auxiliary branch B comprised between the second connection C2 of the first auxiliary branch B with the main branch A and the connection I1 with the second auxiliary branch C comprises the first switching device SD1 and the second mechanical circuit breaker CB2 connected in series.

The current breaking device 20 may further comprise a fifth switching device SD5 disposed on the second auxiliary branch C between the first intermediate terminal I1 and the resistor R.

On the illustrated example, the fifth switching device SD5 is disposed between the first intermediate terminal I1 and the fourth mechanical circuit breaker CB4.

The current breaking device 20 further comprises a sixth switching device SD6 disposed on the third auxiliary branch D.

On the illustrated example, the sixth switching device SD6 is disposed between the second intermediate terminal I2 and the fifth mechanical circuit breaker CB5.

Each switching device SD1, SD2, SD3, SD4, SD5, SD6 can be a two-position disconnector, or a three-position switch.

A two-position disconnector has only two stable positions: a first position, called closed position, in which a mobile contact is contacting a fixed contact, enabling current circulation, and a second position, called open position, in which the mobile contact is separated from the fixed contact, interruption current circulation. This type of disconnector is also called disconnector switch.

A three-position disconnector has three stable positions: the two positions already mentioned, plus a third position in which the mobile contact is earthed. This type of disconnector is also called earthing switch.

Each mechanical circuit breaker CB2, CB3, CB4, CB5 is respectively associated with a switching device SD1, SD4, SD5, SD6 connected in series.

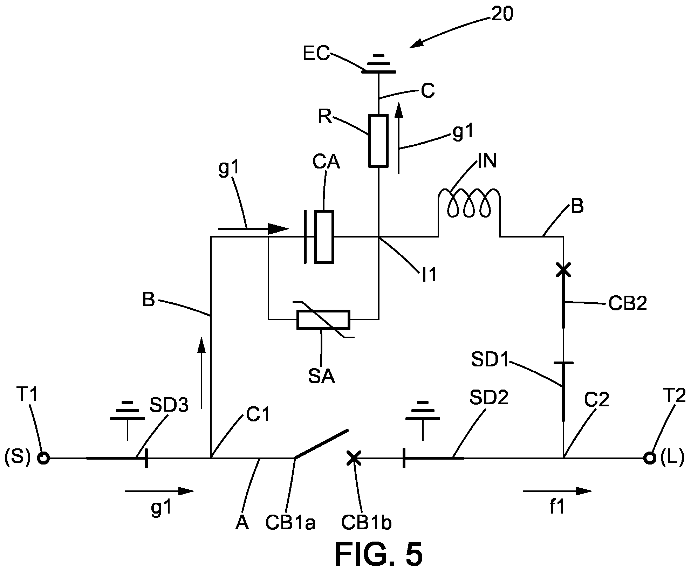

Figures 5, 6, 7 and 8 illustrate the operation of the circuit breaker 20 in the event of a fault in the electric circuit.

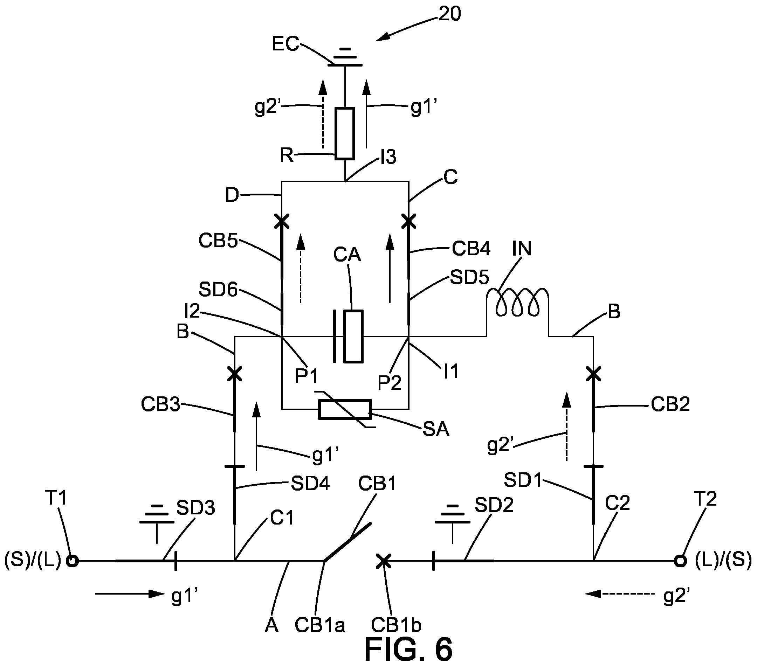

Figure 5 relates to the architecture of the first embodiment, represented on figure 1. Figure 6 relates to the architecture of the second embodiment, represented on figure 2.

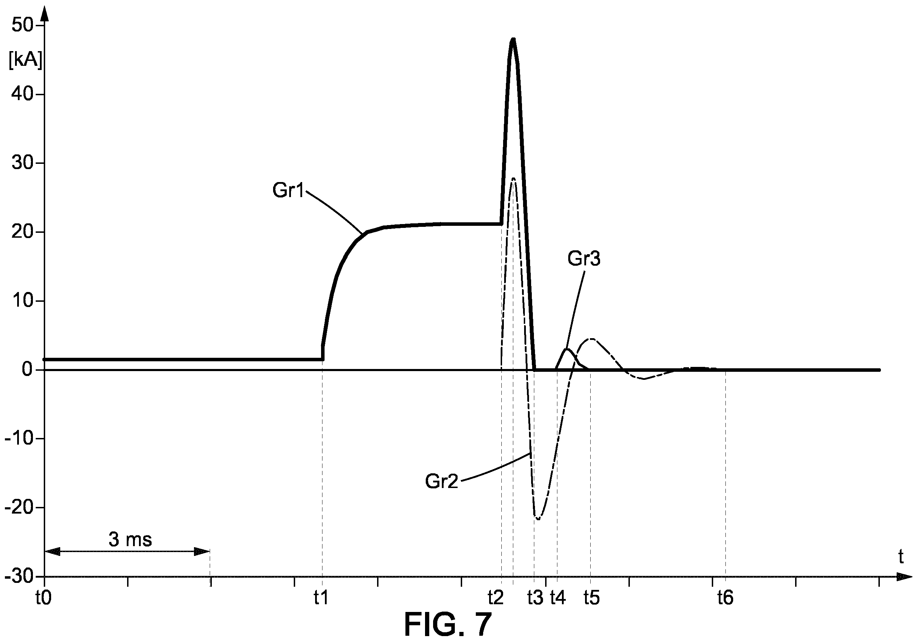

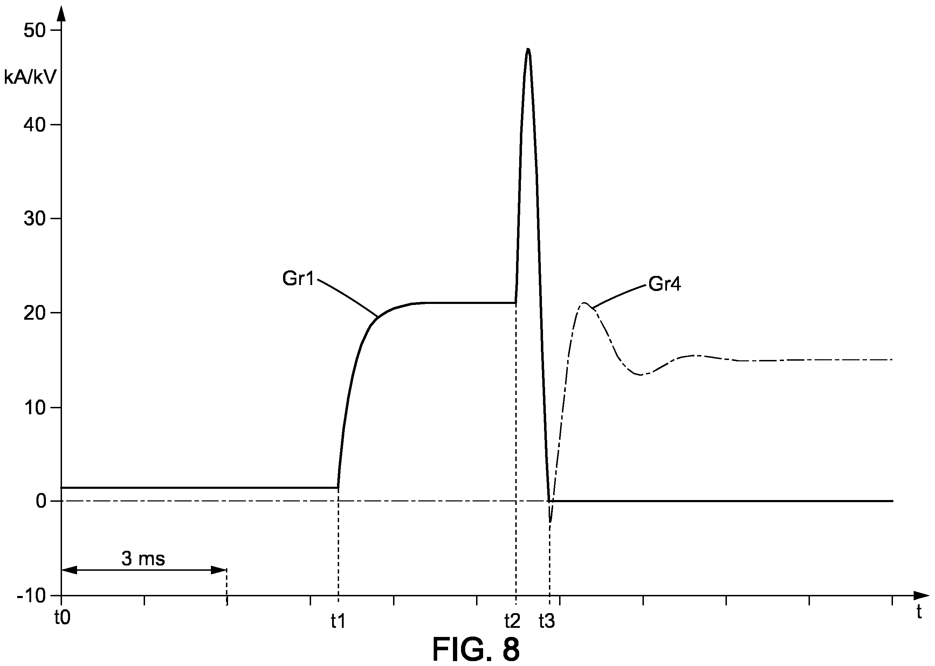

Figure 7 and figure 8 are applicable to both embodiments.

On figure 7, curve Gr1 illustrates the temporal evolution of the current intensity in the part of the main branch A comprised between the first connection C1 and the second connection C2, thus the part of the main branch comprising the first mechanical circuit breaker CB1.

This current reflects the load current, on which a fault current may be superimposed in case of fault.

Curve Gr2 illustrates the temporal evolution of the current in the first auxiliary branch B.

Curve Gr3 illustrates the temporal evolution of the current in the surge arrester SA.

On figure 8, curve Gr4 illustrates the temporal evolution of the voltage across the first mechanical circuit breaker CB1.Curve Gr1 is the same as in figure 7.

Load current intensity is nominal between instant t0 and instant t1, with a steady state value approximately 2000 A.

Instant t1 corresponds to the appearance of a fault, like a short circuit, resulting in a sharp increase in the current intensity. Time window between t1 and t2 corresponds to an opening phase of the first mechanical circuit breaker CB1. During the same time window, a closing phase of the second mechanical circuit breaker CB2 is initiated.

Instant t2 corresponds to the second mechanical circuit breaker CB2 closing the first auxiliary branch B. The first mechanical breaker CB1 and the second mechanical circuit breaker CB2 are in the position corresponding to figure 5. An oscillating current is created in the first auxiliary branch B, which is superimposed upon the current flow in the main branch A. The oscillating current comprises a positive peak followed by a negative peak. The negative peak induces a zero-crossing of the curve Gr1 at instant t3. With the first mechanical circuit breaker CB1 in an opened state and the current crossing zero, a current interruption in the main branch A is achieved.

Curve Gr3 illustrates the action of the surge arrester SA, with the surge arrester limiting the current between instants t4 and t5. The circuit is protected against the effect of the fault. After the current interruption at instant t3, the second mechanical circuit breaker is reopened, and the current reaches 0 at instant t6.

On figure 5, the arrows designated by label g1 illustrate, for the first embodiment, the current circulation for recharging of the capacitor bank CA after a current interruption in the main branch A, in order to be able to reopen the main branch A in case the electrical fault in the main branch A is still present.

Similarly, the arrows designated by labels g1' and g2' illustrate, for the second embodiment, the current circulation for recharging of the capacitor bank CA after a current interruption in the main branch A.

Labels g1' correspond to the configuration where the source of the network is connected to T1 terminal and the loads are connected to T2 terminal.

Labels g2' correspond to the alternative configuration in which the loads of the network are connected to T1 terminal and the source is connected to T2 terminal.

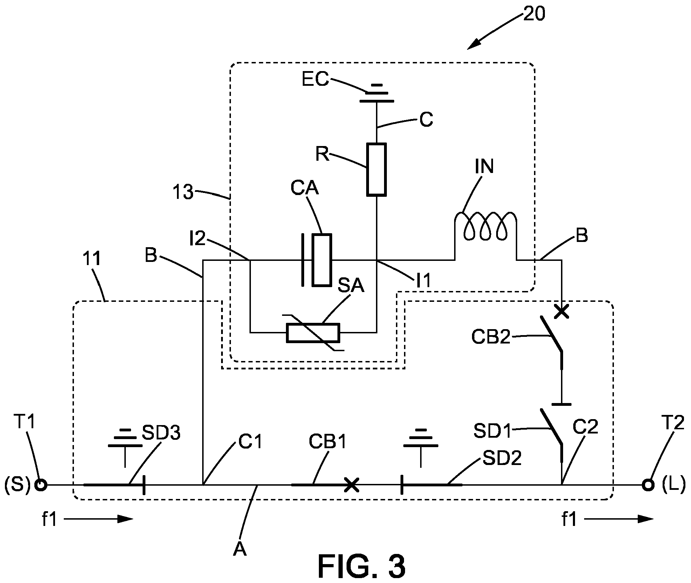

Figure 3 represents an embodiment of the current breaking device 20 derived from the first embodiment represented on figure 1. In the embodiment of figure 3, the first mechanical circuit breaker CB1, the second mechanical circuit breaker CB2 and the third switching device SD3 are disposed in a first gas insulated tank 11.

In this embodiment, the first switching device SD1 and the second switching device SD2 are also disposed in the same gas insulated tank 11.

In other words, the first mechanical circuit breaker CB1, the second mechanical circuit breaker CB2, the first switching device SD1, the second switching device SD2 and the third switching device SD3 are disposed in a first gas insulated tank 11.

The integration of the different mechanical circuit breakers CB1, CB2, CB3 and switching devices SD1, SD2, SD3 in a common gas insulated tank 11 provides electrical insulation characteristics and environmental sensitivity, making this solution robust and reliable. Furthermore, the synchronization of the operation of the first CB1, second CB2 and third CB3 mechanical circuit breakers simplified thanks to the arrangement in a common gas insulated tank 11. The installation and future servicing are simplified. Furthermore, the integration of mechanical circuit breakers and switching devices in a common tank makes a more compact and cheaper solution.

On the embodiment of figure 3, the capacitor bank CA, the inductor IN, the resistor R and the surge arrester SA are disposed in a metal enclosed compartment 13.

The assembly of the current breaking device 20 is easier when the capacitor bank CA, the inductor IN, the resistor R and the surge arrester SA may form a pre-assembled module.

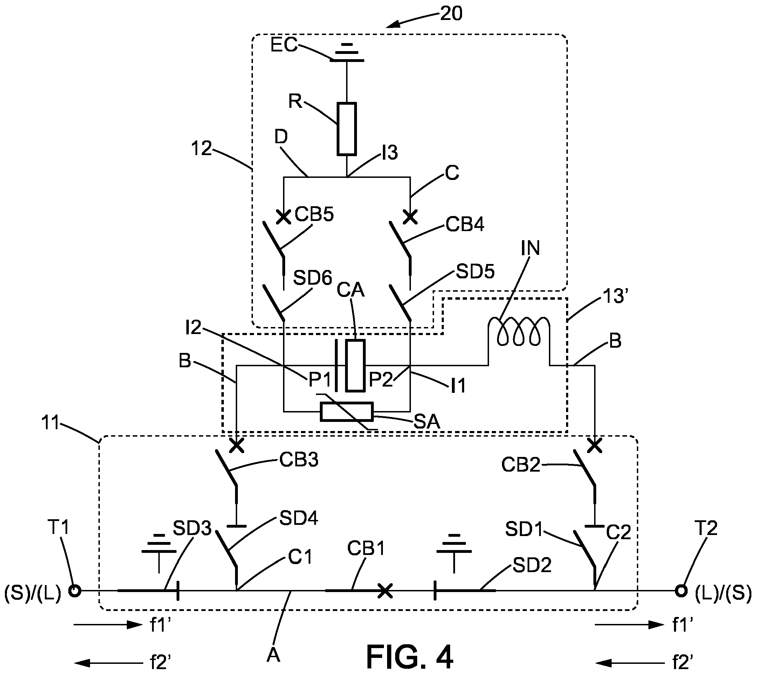

Figure 4 represents an embodiment of the current breaking device 20 derived from the second embodiment represented on figure 2.

The first mechanical circuit breaker CB1, the second mechanical circuit breaker CB2, the first switching device SD1, the second switching device SD2 and the third switching device SD3 are disposed in a first gas insulated tank 11. Furthermore, the fourth switching device SD4 and the third mechanical circuit breaker CB3 are also disposed in the same first gas insulated tank 11.

On the embodiment of the current breaking device 20 illustrated on figure 4, the fourth mechanical circuit breaker CB4 and the fifth mechanical circuit breaker CB5 are disposed in a second gas insulated tank 12. Furthermore, the resistor R is also disposed in the second gas insulated tank 12.

The fifth switching device SD5 and the sixth switching device SD6 are disposed as well in the second gas insulated tank 12.

As before, the synchronization of the different circuit breakers CB4, CB5 is simplified, as well as the installation and future servicing.

In this embodiment, the capacitor bank CA, the inductor IN, and the surge arrester SA are disposed in a metal enclosed compartment 13'.

## Claims

1. Current breaking device (20) for interrupting a current flow in a high voltage direct current path between a first terminal (T1) and a second terminal (T2), comprising :
- a main branch (A) inserted in the direct current path, comprising a first mechanical circuit breaker (CB1), the first mechanical circuit breaker (CB1) being normally closed,
- a first auxiliary branch (B) connected in parallel to the first mechanical circuit breaker (CB1), and comprising a series connection of a capacitor bank (CA), an inductor (IN) and a second mechanical circuit breaker (CB2), called commutation switch, the second mechanical circuit breaker (CB2) being normally open,
- a surge arrester (SA) connected in parallel to the capacitor bank (CA),
- a second auxiliary branch (C) connecting a first intermediate terminal (11) comprised between the capacitor bank (CA) and the inductor (IN) to an earthed connection (EC), the second auxiliary branch (C) comprising a resistor (R),
in which the second mechanical circuit breaker (CB2) is configured for closing the first auxiliary branch (B) in response to the appearance of a fault current in the main branch (A), so as to create a current which is superimposed upon a current flow in the main branch (A) and produces a current zero crossing in the main branch (A).

2. Current breaking device (20) according to claim 1, in which:
- the first terminal (T1) is connected to a source (S) of a network, and
- the second terminal (T2) is connected to a ring of electrical loads (L).

3. Current breaking device (20) according to claim 1, in which the first auxiliary branch (B) comprises a first connection (C1) with the main branch (A) and a second connection (C2) with the main branch (A), the first connection (C1) being comprised between the first terminal (T1) and a first terminal of the first mechanical circuit breaker (CB1), the second connection (C2) being comprised between the second terminal (T2) and a second terminal of the first mechanical circuit breaker (CB1),
the current breaking device (20) further comprising:
- a third mechanical circuit breaker (CB3) disposed on the first auxiliary branch (B) between the first connection (C1) of the first auxiliary branch (B) with the main branch (A) and a connection (P1) of the surge arrester (SA) with the capacitor bank (CA),
- a fourth mechanical circuit breaker (CB4) disposed on the second auxiliary branch (C) between the first intermediate terminal (11) and the resistor (R),
- a third auxiliary branch (D) connecting a second intermediate terminal (I2) comprised between the third mechanical circuit breaker (CB3) and the capacitor bank (CA) to a third intermediate terminal (I3) comprised between the fourth circuit breaker (CB4) and the resistor (R), the third auxiliary branch (D) comprising a fifth circuit breaker (CB5).

4. Current breaking device (20) according to claim 3, configured for operating selectively :
- in a first configuration in which the first terminal (T1) is connected to a source (S) and the second terminal (T2) is connected to a ring of electrical loads (L), or
- in a second configuration in which the first terminal (T1) is connected to a ring of electrical loads (L), and the second terminal (T2) is connected to a source (S).

5. Current breaking device (20) according to any of the preceding claims, further comprising a first switching device (SD1) disposed on the first auxiliary branch (B) between the inductor (IN) and a second connection (C2) of the first auxiliary branch (B) with the main branch (A).

6. Current breaking device (20) according to any of the preceding claims, further comprising a second switching device (SD2) disposed on the main branch (A) between a first connection (C1) of the first auxiliary branch (B) with the main branch (A) and a second connection (C2) of the first auxiliary branch (B) with the main branch (A).

7. Current breaking device (20) according to any of the preceding claims in combination with claim 3, further comprising a third switching device (SD3) disposed on the main branch (A) between the first terminal (T1) and the first connection (C1) of the first auxiliary branch (B) with the main branch (A).

8. Current breaking device (20) according to any of claims 4 to 7 in combination with claim 3, further comprising a fourth switching device (SD4) disposed on the first auxiliary branch (B) between the first connection (C1) of the first auxiliary branch (B) with the main branch (A) and the second intermediate terminal (I2).

9. Current breaking device (20) according to any of claims 4 to 8, further comprising a fifth switching device (SD5) disposed on the second auxiliary branch (C) between the first intermediate terminal (11) and the resistor (R).

10. Current breaking device (20) according to any of claims 4 to 9 in combination with claim 3, further comprising a sixth switching device (SD6) disposed on the third auxiliary branch (D).

11. Current breaking device (20) according to any of the preceding claims in combination with claim 7, in which the first mechanical circuit breaker (CB1), the second mechanical circuit breaker (CB2) and the third switching device (SD3) are disposed in a first gas insulated tank (11).

12. Current breaking device (20) according to the preceding claim in combination with claims 5 and 6, in which the first mechanical circuit breaker (CB1), the second mechanical circuit breaker (CB2), the first switching device (SD1), the second switching device (SD2) and the third switching device (SD3) are disposed in a first gas insulated tank (11).

13. Current breaking device (20) according to claim 11 or 12 in combination with claim 3, in which the third mechanical circuit breaker (CB3) is disposed in the first gas insulated tank (11).

14. Current breaking device (20) according to any of the preceding claims, in which the capacitor bank (CA), the inductor (IN), the resistor (R) and the surge arrester (SA) are disposed in a metal enclosed compartment (13).

15. Current breaking device (20) according to any of the preceding claims in combination with claim 3, in which the fourth mechanical circuit breaker (CB4) and the fifth mechanical circuit breaker (CB5) are disposed in a second gas insulated tank (12).
